# EUROPÄISCHE PATENTSCHRIFT

(11) **EP 3 609 785 B1**
(45) Veröffentlichungstag und Bekanntmachung des Hinweises auf die Patenterteilung: **09.03.2022**
(21) Anmeldenummer: 18725735.7
(22) Anmeldetag: 29.03.2018
(51) Int. Cl.: B64D 11/06, B60N 2/68, B60N 2/75

(54) **LUFTFAHRZEUGSITZVORRICHTUNG**
AIRCRAFT SEAT DEVICE
DISPOSITIF DE SIÈGE D'AÉRONEF

(30) Priorität: 30.03.2017 DE 102017003121
(43) Veröffentlichungstag der Anmeldung: 19.02.2020
(73) Patentinhaber: E.I.S. - Aircraft GmbH, 53881 Euskirchen (DE)
(72) Erfinder: ACHILLES, Sven, Ulrich, 74545 Michelfeld (DE); HUPPERICH, Gerold, Karl, 53949 Dahlem (DE)
(86) Internationale Anmeldenummer: PCT/EP2018/000139
(87) Internationale Veröffentlichungsnummer: WO 2018/177600

(56) Entgegenhaltungen:
- EP-A1- 2 520 490
- WO-A1-2004/024560
- WO-A1-2015/195456
- US-A1- 2007 267 543
- US-A1- 2012 067 513
- US-A1- 2014 232 153
- US-A1- 2014 375 090

## Beschreibung

### Stand der Technik

Die Erfindung geht aus von einer Luftfahrzeugsitzvorrichtung nach dem Oberbegriff des Anspruchs 1 .

Aus dem Stand der Technik sind Luftfahrzeugsitze bekannt, welche wenigstens eine lasttragende Baueinheit umfassen, welche zumindest teilweise aus einem mit Verstärkungsfasern verstärkten Kunststoff bestehen. Zur Herstellung der lasttragenden Baueinheit werden dabei Platten und/oder Matten aus einem Glasfasergewebe und/oder Kohlenstofffasergewebe, sogenannte "Prepregs", verwendet, welche mit einem unverstärkten Kunststoff umspritzt werden, was zu einem aufwendigen und komplizierten Herstellungsverfahren führt. Ein Beispiel ist aus der WO2015195456 A1 bekannt. Die Aufgabe der Erfindung besteht insbesondere darin, eine gattungsgemäße Vorrichtung mit verbesserten Eigenschaften hinsichtlich einer Effizienz bereitzustellen. Die Aufgabe wird durch die kennzeichnenden Merkmale des Anspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Luftfahrzeugsitzvorrichtung mit zumindest einer lasttragenden Baueinheit, welche in zumindest einem Außenteilbereich der Baueinheit aus einem mit Verstärkungsfasern verstärkten Kunststoff besteht.

Es wird vorgeschlagen, dass die Verstärkungsfasern zumindest im Wesentlichen homogen über den gesamten Außenteilbereich verteilt sind. Durch diese Ausgestaltung kann eine Luftfahrzeugsitzvorrichtung mit verbesserten Eigenschaften hinsichtlich einer Effizienz, insbesondere einer Herstellungseffizienz, einer Bauteileeffizienz, einer Gewichtseffizienz und/oder einer Kosteneffizienz, bereitgestellt werden. Zudem kann vorteilhaft eine Stabilität erhöht und/oder ein Gewicht der Luftfahrzeugsitzvorrichtung verringert werden. Darüber hinaus kann vorteilhaft eine Flexibilität, insbesondere eine Designflexibilität, verbessert werden.

Unter einer "Luftfahrzeugsitzvorrichtung" soll in diesem Zusammenhang insbesondere zumindest ein Teil, insbesondere eine Unterbaugruppe, eines Luftfahrzeugsitzes "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Ferner soll unter einer "lasttragenden Baueinheit" insbesondere eine Einheit verstanden werden, welche dazu vorgesehen ist, üblichen und/oder typischen auf die lasttragende Baueinheit wirkenden Kräften und/oder Drücken standzuhalten, insbesondere ohne dabei verformt und/oder zerstört zu werden. Insbesondere kann die lasttragende Baueinheit dabei, insbesondere zumindest zeitweise und vorteilhaft dauerhaft, eine Spannung und/oder einen Druck von zumindest 20 MPa, vorzugsweise von zumindest 40 MPa, vorteilhaft von zumindest 60 MPa, besonders bevorzugt von zumindest 100 MPa und besonders vorteilhaft von zumindest 150 MPa, aufnehmen, insbesondere ohne dabei verformt und/oder zerstört zu werden. Vorzugsweise ist die lasttragende Baueinheit dazu vorgesehen, eine Gewichtskraft wenigstens eines, vorteilhaft auf der Baueinheit zumindest teilweise angeordneten, Objekts und/oder dynamische Kräfte des Objekts, wie beispielsweise Beschleunigungskräfte, insbesondere bei einem Betrieb des Luftfahrzeugs, und/oder von außen wirkende Kräfte, wie beispielsweise Stoßkräfte, zumindest teilweise und vorzugsweise zu wenigstens einem Großteil aufzunehmen und vorteilhaft in zumindest einem montierten Zustand und/oder zumindest einem Betriebszustand, insbesondere mittelbar und/oder unmittelbar, in wenigstens eine Tragestruktur des Luftfahrzeugs, wie beispielsweise einen Boden, eine Decke, eine Seitenwand, eine Gepäckablage und/oder ein beliebiges weiteres Strukturbauteil des Luftfahrzeugs, einzuleiten. Die lasttragende Baueinheit kann dabei als beliebige lasttragende Baueinheit ausgebildet sein, wie beispielsweise zumindest als Teil eines Sitzbauteils, wie beispielsweise eines Sitzgestells, eines Tischs, einer Tischfixierung, einer Rückenlehne, einer Armlehne, einer Sitzfläche und/oder eines Sitzteilers oder dergleichen. Insbesondere kann der Luftfahrzeugsitz und/oder die Luftfahrzeugsitzvorrichtung auch mehrere, insbesondere miteinander gekoppelte und vorteilhaft zumindest im Wesentlichen baugleiche, lasttragende Baueinheiten aufweisen, welche vorteilhaft eine gemeinsame Basisstruktur ausbilden. Unter dem Ausdruck "zu wenigstens einem Großteil" sollen dabei insbesondere zumindest 55 %, vorteilhaft zumindest 65 %, vorzugsweise zumindest 75 %, besonders bevorzugt zumindest 85 % und besonders vorteilhaft zumindest 95 % verstanden werden. Unter "zumindest im Wesentlichen baugleichen" Objekten sollen insbesondere Objekte verstanden werden, welche zumindest im Wesentlichen identisch zueinander aufgebaut sind, sich jedoch insbesondere in zumindest einem Merkmal, wie beispielsweise einer äußeren Form, einem inneren Aufbau, einer zu tragenden Last und/oder einer Funktionsweise, zumindest teilweise voneinander unterscheiden können.

Darüber hinaus soll unter einem "Außenteilbereich" der lasttragenden Baueinheit insbesondere ein Teil eines Außenbereichs und/oder ein Teil eines Nahbereichs eines Oberflächenbereichs der lasttragenden Baueinheit verstanden werden. Besonders bevorzugt weist der Außenteilbereich ein Volumen auf, welches zumindest 10 %, vorzugsweise zumindest 20 %, besonders bevorzugt zumindest 30 % und besonders vorteilhaft zumindest 50 %, eines Gesamtvolumens der lasttragenden Baueinheit entspricht. Vorzugsweise begrenzt und/oder definiert der Außenteilbereich eine äußere Oberfläche der lasttragenden Baueinheit zumindest teilweise. Besonders bevorzugt erstreckt sich der Außenteilbereich dabei über zumindest 10 %, vorzugsweise über zumindest 20 %, besonders bevorzugt über zumindest 30 % und besonders vorteilhaft über zumindest 50 % einer gesamten äußeren Oberfläche der lasttragenden Baueinheit. Insbesondere kann die lasttragende Baueinheit dabei auch zu wenigstens einem Großteil und/oder vollständig aus dem mit Verstärkungsfasern verstärkten Kunststoff bestehen.

Der Kunststoff kann ein beliebiger duroplastischer und/oder vorteilhaft thermoplastischer Kunststoff sein, wie beispielsweise Polycarbonate (PC), Polyetherimid (PEI), Polyphenylensulfid (PPS) und/oder besonders bevorzugt Polyetheretherketon (PEEK). Darüber hinaus können die Verstärkungsfasern insbesondere zumindest teilweise, vorzugsweise zu wenigstens einem Großteil und besonders bevorzugt vollständig, aus Carbon, Graphit, Glas, Keramik und/oder Aramid bestehen. Erfindungsgemäß sind die Verstärkungsfasern jedoch im Rahmen fertigungstechnischer Möglichkeiten und/oder im Rahmen standardisierter Toleranzen homogen über den gesamten Außenteilbereich verteilt

Gemäß eines weiteren Aspekts der Erfindung, welcher insbesondere für sich allein oder vorteilhaft zusätzlich zu dem zuvor genannten Aspekt der Erfindung realisiert werden kann, wird eine Luftfahrzeugsitzvorrichtung vorgeschlagen, mit einer lasttragenden Baueinheit, welche in zumindest einem Außenteilbereich der Baueinheit aus einem mit Verstärkungsfasern verstärkten Kunststoff besteht, wobei der Außenteilbereich wesentliche lasttragende Eigenschaften aufweist. Hierdurch können insbesondere die bereits zuvor genannten Vorteile erreicht werden.

Insbesondere kann durch eine entsprechende Ausgestaltung der Luftfahrzeugsitzvorrichtung eine Effizienz, insbesondere eine Herstellungseffizienz, eine Bauteileeffizienz, eine Gewichtseffizienz und/oder eine Kosteneffizienz, verbessert werden. Zudem kann vorteilhaft eine Stabilität erhöht und/oder ein Gewicht der Luftfahrzeugsitzvorrichtung verringert werden. Darüber hinaus kann vorteilhaft eine Flexibilität, insbesondere eine Designflexibilität, verbessert werden. In diesem Zusammenhang soll unter der Wendung "wesentliche lasttragende Eigenschaften" insbesondere verstanden werden, dass der Außenteilbereich dazu vorgesehen ist, wenigstens 10 %, vorteilhaft wenigstens 30 % und besonders bevorzugt wenigstens 50 %, einer gesamten auf die lasttragenden Baueinheit wirkenden Last zu tragen.

Ferner wird vorgeschlagen, dass die, insbesondere lasttragende, Baueinheit wenigstens eine eine Form der Baueinheit zumindest im Wesentlichen definierende Struktureinheit aufweist, welche den Außenteilbereich aufweist. Darunter, dass "die Struktureinheit zumindest im Wesentlichen eine Form der Baueinheit definiert" soll insbesondere verstanden werden, dass die Struktureinheit zu wenigstens einem Großteil die äußere Oberfläche der lasttragenden Baueinheit nachbildet. Vorzugsweise bildet die Struktureinheit dabei einen Grundkörper der, insbesondere lasttragenden, Baueinheit aus. Hierdurch kann insbesondere eine vorteilhaft flexible lasttragende Baueinheit bereitgestellt werden, welche insbesondere mittels weiterer Anbauelemente und/oder Funktionselemente optimiert werden kann.

Des Weiteren wird vorgeschlagen, dass die Struktureinheit zu wenigstens einem Großteil und besonders bevorzugt vollständig, aus dem mit Verstärkungsfasern verstärkten Kunststoff besteht. Insbesondere könnten die Verstärkungsfasern dabei in einem Teilbereich der Struktureinheit auch zumindest teilweise inhomogen verteilt sein. Bevorzugt sind die Verstärkungsfasern jedoch im Rahmen fertigungstechnischer Möglichkeiten und/oder im Rahmen standardisierter Toleranzen homogen über die gesamte Struktureinheit verteilt. Hierdurch kann insbesondere eine vorteilhaft hohe Stabilität erreicht werden.

Bildet die Struktureinheit ein zu wenigstens einem Großteil geschlossenes Hohlprofil aus, kann insbesondere eine Gewichtseffizienz verbessert werden. Zudem kann die Struktureinheit insbesondere besonders einfach an verschieden Anforderungen und/oder Bedürfnisse angepasst werden.

Gemäß einer weiteren Ausgestaltung der Erfindung wird vorgeschlagen, dass die Struktureinheit zumindest eine Sollbruchstruktur aufweist. Die Struktureinheit könnte dabei mehrere gegeneinander verschiebbare Sollbruchstrukturelemente aufweisen, welche insbesondere die Sollbruchstruktur ausbilden und vorteilhaft in wenigstens einem Betriebszustand plastisch verformt und/oder zerstört werden können. Vorzugsweise weist die Sollbruchstruktur jedoch genau ein kreuzförmig, streifenförmig und/oder besonders bevorzugt wabenförmig ausgebildetes Sollbruchstrukturelement auf, welches insbesondere in zumindest einem Betriebszustand zu einer definierten Verformung und/oder Zerstörung vorgesehen ist. Hierdurch kann insbesondere eine besonders hohe Betriebssicherheit erreicht werden. Zudem kann insbesondere eine an unterschiedliche Sicherheitsstandards anpassbare Luftfahrzeugsitzvorrichtung bereitgestellt werden.

Eine besonders hohe Stabilität und/oder ein besonders effiziente Herstellung kann insbesondere erreicht werden, wenn die Struktureinheit einstückig ausgebildet ist. Unter "einstückig" soll in diesem Zusammenhang insbesondere zumindest stoffschlüssig verbunden und/oder miteinander ausgebildet verstanden werden. Der Stoffschluss kann beispielsweise durch einen Klebeprozess, einen Anspritzprozess, einen Schweißprozess, einen Lötprozess und/oder einen anderen Prozess hergestellt werden. Vorteilhaft soll unter einstückig aus einem Stück und/oder in einem Stück geformt verstanden werden. Vorzugsweise wird dieses eine Stück aus einem einzelnen Rohling, einer Masse und/oder einem Guss, wie beispielsweise in einem Extrusionsverfahren, insbesondere einem Ein- und/oder Mehrkomponenten-Extrusionsverfahren, und/oder einem Spritzgussverfahren, insbesondere einem Ein- und/oder Mehrkomponenten-Spritzgussverfahren, hergestellt. Besonders bevorzugt ist die Struktureinheit dabei als Spritzgussteil ausgebildet.

Darüber hinaus wird vorgeschlagen, dass die Struktureinheit wenigstens zwei Strukturelemente aufweist, welche zumindest im Wesentlichen korrespondierend zueinander ausgebildet sind. Die Strukturelemente können dabei beispielsweise zumindest teilweise aus unterschiedlichen Materialien bestehen, wodurch insbesondere eine vorteilhafte Vielseitigkeit und/oder Flexibilität erreicht werden kann. Vorzugsweise bestehen die Strukturelemente jedoch aus einem selben Material, insbesondere dem mit den Verstärkungsfasern verstärkten Kunststoff, wodurch insbesondere eine vorteilhaft einfache Herstellung erreicht werden kann. Unter "zumindest im Wesentlichen korrespondierenden" Objekten sollen dabei insbesondere Objekte verstanden werden, welche zumindest abschnittsweise korrespondierend zueinander ausgebildete Außenformen aufweisen, sich jedoch insbesondere in zumindest einem Merkmal voneinander unterscheiden können. Vorteilhaft können die Strukturelemente dabei spiegelsymmetrisch oder abgesehen von Fertigungstoleranzen und/oder im Rahmen fertigungstechnischer Möglichkeiten und/oder im Rahmen standardisierter Toleranzen identisch zueinander ausgebildet sein.

Gemäß einer besonders bevorzugten Ausgestaltung der Erfindung wird vorgeschlagen, dass die Baueinheit wenigstens eine mit der Struktureinheit verbindbare und/oder verbundene und vorzugsweise die Struktureinheit verstärkende Anbaueinheit aufweist, wodurch insbesondere eine Dauerfestigkeit und/oder eine Standzeit der

Luftfahrzeugsitzvorrichtung weiter verbessert werden kann. Alternativ oder zusätzlich kann insbesondere eine Erscheinung der lasttragenden Baueinheit vorteilhaft an unterschiedliche Anforderungen angepasst werden. Unter einer "Anbaueinheit" soll dabei insbesondere eine Einheit mit wenigstens einem Anbauelement verstanden werden, welche mit der Struktureinheit, vorteilhaft der äußeren Oberfläche der Struktureinheit, in Wirkverbindung steht und insbesondere formschlüssig, kraftschlüssig und/oder stoffschlüssig mit der Struktureinheit verbunden ist. Bevorzugt besteht die Anbaueinheit zumindest teilweise und vorzugsweise zu wenigstens einem Großteil aus einem Material, welches von einem Material der Struktureinheit abweicht. Besonders bevorzugt besteht die Anbaueinheit zumindest teilweise und vorzugsweise zu wenigstens einem Großteil aus einem Metall, vorteilhaft Stahl und/oder Aluminium, einer Metalllegierung, einer Keramik und/oder einem hochfesten Kunststoff. Zudem kann die Anbaueinheit vorteilhaft mehrere, wie beispielsweise zumindest zwei, zumindest fünf und/oder zumindest acht, Anbauelemente umfassen. Zudem kann die Anbaueinheit auch zumindest ein Anbauelement umfassen, welches beispielsweise als Designelement, insbesondere Designfolie oder dergleichen, ausgebildet sein kann.

Weist die Anbaueinheit wenigstens ein Anbauelement auf, welches dazu vorgesehen ist, eine Koppelstruktur der Struktureinheit, insbesondere zur Kopplung mit einem weiteren Objekt, zu verstärken, kann insbesondere eine vorteilhaft sichere Kopplung der Struktureinheit mit dem weiteren Objekt erreicht werden. Vorteilhaft ist das Anbauelement in diesem Fall zumindest im Wesentlichen zylinderförmig, zumindest im Wesentlichen spiralförmig und/oder zumindest im Wesentlichen helixförmig ausgebildet. Unter einem "zumindest im Wesentlichen zylinderförmigen" Objekt soll in diesem Zusammenhang insbesondere ein Objekt verstanden werden, welches von einem zylinderförmigen Referenzobjekt mit einem Volumenanteil von höchstens 20 %, vorzugsweise von höchstens 15 % und besonders bevorzugt von höchstens 10 % abweicht. Entsprechendes soll insbesondere für die Wendungen "zumindest im Wesentlichen spiralförmig" und "zumindest im Wesentlichen helixförmig" gelten.

Weiter wird vorgeschlagen, dass die Anbaueinheit wenigstens ein, vorzugsweise zumindest im Wesentlichen zylinderförmiges und/oder streifenförmig ausgebildetes, Anbauelement, insbesondere das bereits zuvor genannte Anbauelement und/oder ein weiteres Anbauelement, aufweist, welches dazu vorgesehen ist, eine Haupttragestruktur der Struktureinheit zu verstärken. Insbesondere ist das Anbauelement in diesem Fall zur Verstärkung der Haupttragestruktur in einem Bereich der Struktureinheit angeordnet, in welchem eine größte Belastung auf die Struktureinheit wirkt und/oder eine größte Last auf die Struktureinheit einwirkt. Vorteilhaft kann das Anbauelement in diesem Fall Halteelemente, wie beispielsweise Haltepins, aufweisen, welche zu einer Kopplung und/oder einer Befestigung des Anbauelements an der Struktureinheit vorgesehen sind. Hierdurch kann insbesondere eine Stabilität der Struktureinheit und/oder der lasttragenden Baueinheit weiter optimiert werden.

Darüber hinaus wird vorgeschlagen, dass die Anbaueinheit wenigstens ein, vorzugsweise streifenförmig ausgebildetes und/oder als Clips und/oder Klammer ausgebildetes, Anbauelement, insbesondere das bereits zuvor genannte Anbauelement und/oder ein zusätzliches Anbauelement, aufweist, welches dazu vorgesehen ist, wenigstens zwei Strukturelemente der Struktureinheit, vorteilhaft die bereits zuvor genannten Strukturelemente, miteinander zu verbinden. Hierdurch kann insbesondere eine vorteilhaft einfache und/oder flexible Verbindung der Strukturelemente der Struktureinheit erreicht werden.

Erfindungsgemäß wird vorgeschlagen, dass die, insbesondere lasttragende, Baueinheit wenigstens eine zumindest teilweise, vorzugsweise zu wenigstens einem Großteil und besonders bevorzugt vollständig, in die Struktureinheit eingebettete Funktionseinheit aufweist. Bevorzugt ist die Funktionseinheit in diesem Fall mit der Struktureinheit umspritzt. Unter einer "Funktionseinheit" soll dabei insbesondere eine Einheit verstanden werden, welche dazu vorgesehen ist, in zumindest einem Betriebszustand zumindest eine, insbesondere mit dem Luftfahrzeugsitz in Verbindung stehende, Funktion wahrzunehmen. Die Funktion kann dabei eine beliebige Funktion sein, wie beispielsweise eine Verstärkungsfunktion, eine Bewegungsfunktion, eine Beleuchtungsfunktion, eine Befestigungsfunktion und/oder eine Lagerfunktion. Hierdurch kann insbesondere eine besonders flexible Luftfahrzeugsitzvorrichtung bereitgestellt werden.

Des Weiteren wird erfindungsgemäß vorgeschlagen, dass die Funktionseinheit wenigstens ein, vorteilhaft zumindest im Wesentlichen zylinderförmiges, Stützelement aufweist, welches zu einer Unterstützung, insbesondere einer inneren Verstärkung, der Struktureinheit vorgesehen ist, wodurch insbesondere eine Stabilität der Luftfahrzeugsitzvorrichtung weiter verbessert werden kann. Besonders vorteilhaft besteht das Stützelement dabei zumindest teilweise, vorzugsweise zu wenigstens einem Großteil und besonders bevorzugt vollständig, aus einem Metall, einer Metalllegierung, einer Keramik und/oder einem Kunststoff, insbesondere einem hochfesten Kunststoff und/oder einem faserverstärkten Kunststoff. Vorteilhaft kann das Stützelement ferner mittels eines 3D-Druck-Verfahrens hergestellt werden, wodurch insbesondere eine vorteilhaft einfache und/oder schnelle Herstellung des Stützelements erreicht werden kann und gleichzeitig komplizierte Strukturen hergestellt werden können. Darüber hinaus ist das Stützelement besonders vorteilhaft zumindest abschnittsweise mit Ausnehmungen und/oder Löchern versehen und insbesondere perforiert, schlaufenförmig und/oder maschenförmig ausgebildet, wodurch insbesondere ein Gewicht des Strukturelements weiter reduziert werden kann.

Ferner wird vorgeschlagen, dass die Funktionseinheit wenigstens ein Scharnierelement aufweist, welches dazu vorgesehen ist, wenigstens zwei Strukturelemente der Struktureinheit, vorteilhaft die bereits zuvor genannten Strukturelemente, beweglich miteinander zu verbinden, insbesondere derart, dass die Strukturelemente beweglich relativ zueinander sind. Hierdurch kann insbesondere eine vorteilhaft flexible und/oder bewegliche lasttragende Baueinheit bereitgestellt werden.

Die Luftfahrzeugsitzvorrichtung hierbei nicht auf die oben beschriebene Anwendung und Ausführungsform beschränkt sein. Insbesondere kann die Luftfahrzeugsitzvorrichtung einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1a-b: ein Luftfahrzeug mit einem innerhalb des Luftfahrzeugs angeordneten Luftfahrzeugsitz umfassend wenigstens eine Luftfahrzeugsitzvorrichtung,
- Fig. 2: eine beispielhaft als Armlehne ausgebildete lasttragende Baueinheit der Luftfahrzeugsitzvorrichtung in einer perspektivischen Darstellung, wobei die lasttragende Baueinheit zumindest eine Struktureinheit und eine Anbaueinheit umfasst,
- Fig. 3: eine Materialzusammensetzung der Struktureinheit in einer Detailansicht,
- Fig. 4: eine Sollbruchstruktur der Struktureinheit in einer schematischen Darstellung,
- Fig. 5: ein Stützelement einer in die Struktureinheit eingebetteten Funktionseinheit der lasttragenden Baueinheit,
- Fig. 6a-b: ein Scharnierelement der in die Struktureinheit eingebetteten Funktionseinheit zur beweglichen Kopplung zweier Strukturelemente der Struktureinheit,
- Fig. 7: ein beispielhaftes Verfahren zur Kopplung der Baueinheit mit wenigstens einem weiteren Objekt,
- Fig. 8: ein nicht erfindungsgemäßes, jedoch für das Verständnis von bestimmten Ausführungsbeispielen hilfreiches Beispiel einer beispielhaft als Sitzteiler ausgebildeten lasttragenden Baueinheit einer Luftfahrzeugsitzvorrichtung,
- Fig. 9: die lasttragende Baueinheit aus Figur 8 in einer Detaildarstellung,
- Fig. 10: die lasttragende Baueinheit aus den Figuren 8 und 9 in einer Schnittdarstellung entlang der Linie X-X in Figur 9,
- Fig. 11: ein weiteres nicht erfindungsgemäßes, jedoch für das Verständnis von bestimmten Ausführungsbeispielen hilfreiches Beispiel einer beispielhaft als Sitzteiler ausgebildeten lasttragenden Baueinheit einer Luftfahrzeugsitzvorrichtung,
- Fig. 12: die lasttragende Baueinheit aus Figur 11 in einer Schnittdarstellung,
- Fig. 13: ein Anbauelement einer Anbaueinheit der Luftfahrzeugsitzvorrichtung aus den Figuren 11 und 12,
- Fig. 14: ein weiteres nicht erfindungsgemäßes, jedoch für das Verständnis von bestimmten Ausführungsbeispielen hilfreiches Beispiel einer beispielhaft als Sitzteiler ausgebildeten lasttragenden Baueinheit einer Luftfahrzeugsitzvorrichtungund
- Fig. 15: die lasttragende Baueinheit aus Figur 14 in einer Schnittdarstellung entlang der Linie XV-XV in Figur 14.

### Beschreibung der Ausführungsbeispiele

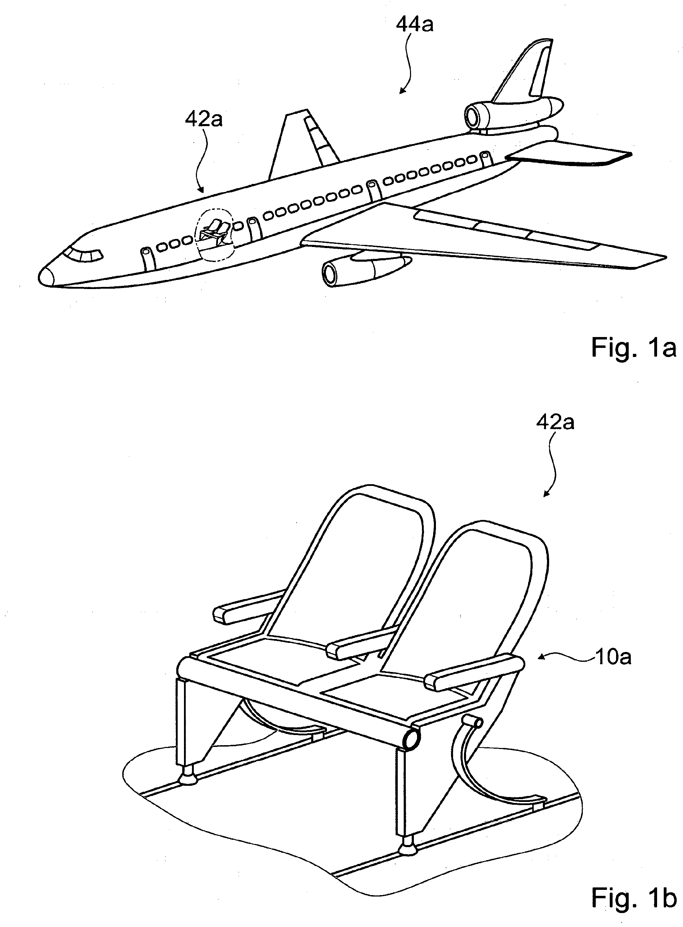

Die Figuren 1a und 1b zeigen ein beispielhaft als Personenflugzeug ausgebildetes Luftfahrzeug 44a, welches wenigstens einen Luftfahrzeugsitz 42a mit einer Luftfahrzeugsitzvorrichtung umfasst. Alternativ könnte ein Luftfahrzeug jedoch auch als Transportflugzeug, als Gleitflugzeug, als Hubschrauber und/oder als Luftschiff oder dergleichen ausgebildet sein.

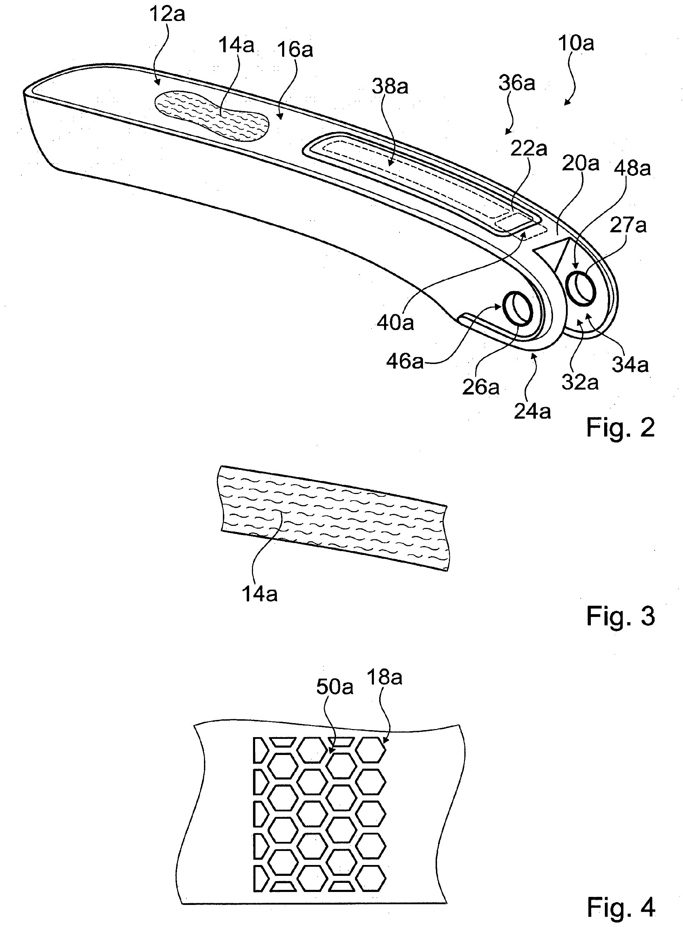

Die Luftfahrzeugsitzvorrichtung umfasst zumindest eine lasttragende Baueinheit 10a. Die Baueinheit 10a ist im vorliegenden Fall beispielhaft als Armlehne ausgebildet (vgl. auch Figur 2). Die Baueinheit 10a ist dazu vorgesehen, eine Spannung von zumindest 50 MPa aufzunehmen, insbesondere ohne dabei verformt und/oder zerstört zu werden, und insbesondere in einem montierten Zustand mittelbar in eine Tragestruktur des Luftfahrzeugs 44a einzuleiten. Alternativ könnte eine lasttragende Baueinheit jedoch auch zumindest als Teil eines Sicherheitsriegels, eines Klapptischs, einer Rückenlehne, eines Torsionsprofils, eines Torsionsrohrs und/oder eines Sitzteilers oder dergleichen ausgebildet sein.

Die Baueinheit 10a besteht zumindest in einem Außenteilbereich 12a aus einem mit Verstärkungsfasern 14a verstärkten Kunststoff. Der Außenteilbereich 12a begrenzt und/oder definiert eine äußere Oberfläche der lasttragenden Baueinheit 10a. Alternativ oder zusätzlich könnte oberhalb des Außenteilbereichs jedoch auch noch eine zusätzliche Schicht und/oder Beschichtung, beispielsweise in Form einer Farbe, eines Lacks und/oder einer Folie, aufgebracht werden. Der Außenteilbereich 12a erstreckt sich dabei über zumindest 80 % und vorzugsweise über zumindest 90 % einer gesamten äußeren Oberfläche der lasttragenden Baueinheit 10a. Der Außenteilbereich 12a weist ferner wesentliche lasttragende Eigenschaften auf. Im vorliegenden Fall besteht die Baueinheit 10a zu wenigstens einem Großteil aus dem mit Verstärkungsfasern 14a verstärkten Kunststoff. Die Verstärkungsfasern 14 sind dabei zumindest im Wesentlichen homogen über die Baueinheit 10a verteilt. Figur 3 zeigt einen Teil des Materials der Baueinheit 10a mit den darin angeordneten Verstärkungsfasern 14a. Die Verstärkungsfasern 14a sind derart im Material der Baueinheit 10a angeordnet, dass die Verstärkungsfasern 14a zumindest in dem Außenteilbereich 12a homogen verteilt sind. Der mit den Verstärkungsfasern 14a verstärkte Kunststoff ist im vorliegenden Fall Polyetheretherketon (PEEK), welcher mit Verstärkungsfasern 14a aus Carbon verstärkt ist. Alternativ könnte ein mit Verstärkungsfasern verstärkter Kunststoff jedoch auch Polyetherimid (PEI) und/oder Polyphenylensulfid (PPS) oder dergleichen sein. Zudem könnten Verstärkungsfasern aus Graphit, Glas, Keramik und/oder Aramid bestehen.

Die Baueinheit 10a weist eine Struktureinheit 16a auf. Die Struktureinheit 16a bildet einen Grundkörper der Baueinheit 10a aus. Die Struktureinheit 16a definiert zumindest im Wesentlichen eine Form der Baueinheit 10a. Die Struktureinheit 16a weist den Außenteilbereich 12a auf. Im vorliegenden Fall bildet die Struktureinheit 16a ein zu wenigstens einem Großteil geschlossenes Hohlprofil aus. Alternativ könnte eine Struktureinheit jedoch auch ein U-Profil ausbilden, welches mittels eines Verschlusselements und/oder eines Abdeckelements zu einem geschlossenen Hohlprofil ergänzt werden kann. Die Struktureinheit 16a besteht vollständig aus dem mit den Verstärkungsfasern 14a verstärkten Kunststoff. Die Verstärkungsfasern 14a sind dabei zumindest im Wesentlichen homogen über die gesamte Struktureinheit 16a verteilt. Alternativ könnte eine Struktureinheit jedoch auch einen Vollkörper ausbilden und/oder lediglich teilweise aus einem mit den Verstärkungsfasern verstärkten Kunststoff bestehen. Die Struktureinheit 16a weist eine Koppelstruktur 32a auf. Die Koppelstruktur 32a weist im vorliegenden Fall beispielhaft zwei, insbesondere als Koppelausnehmungen ausgebildete, Koppelelemente 46a, 48a auf. Die Koppelelemente 46a, 48a sind als zylinderförmige Ausnehmungen ausgebildet. Die Koppelstruktur 32a ist zur Kopplung mit einem weiteren Bauteil des Luftfahrzeugsitzes 42a vorgesehen. Die Koppelstruktur 32a ist zur Verbindung der Struktureinheit mit dem weiteren Bauteil des Luftfahrzeugsitzes 42a vorgesehen. Prinzipiell könnte eine Struktureinheit jedoch auch frei von einer Koppelstruktur sein. Zudem könnte eine Koppelstruktur eine andere Anzahl an Koppelelementen aufweisen, wie beispielsweise genau ein Koppelelement oder zumindest drei Koppelelemente. Ferner ist denkbar, wenigstens ein Koppelelement bolzenförmig auszubilden. Darüber hinaus könnte wenigstens ein Koppelelement halbkugelförmig, quaderförmig oder als Gabelteil ausgebildet sein. Zudem können Koppelelemente bevorzugt mit flächigen Koppelblechen verspritzt werden.

Die Struktureinheit 16a weist ferner eine Haupttragestruktur 34a auf. Die Haupttragestruktur 34a der Struktureinheit 16a entspricht dabei einem Abschnitt der Struktureinheit 16a, auf welchen eine größte Belastung wirkt und/oder eine größte Last einwirkt. Die Haupttragestruktur 34a der Struktureinheit 16a ist im vorliegenden Fall identisch mit der Koppelstruktur 32a. Prinzipiell könnte eine Haupttragestruktur jedoch auch in einem von einer Koppelstruktur abweichenden Bereich einer Struktureinheit angeordnet sein.

Darüber hinaus kann die Struktureinheit 16a eine Sollbruchstruktur 18a aufweisen (vgl. auch Figur 4). Die Sollbruchstruktur 18a ist zu einer Schwächung der Struktureinheit 16a in einem definierten Bereich vorgesehen. Die Sollbruchstruktur 18a ist in einem Bereich, insbesondere einem Nahbereich, der Haupttragestruktur 34a angeordnet. Die Sollbruchstruktur 18a ist in zumindest einem Betriebszustand zu einer definierten Verformung und/oder Zerstörung vorgesehen. Dazu umfasst die Sollbruchstruktur 18a wenigstens ein Sollbruchstrukturelement 50a. Das Sollbruchstrukturelement 50a ist wabenförmig ausgebildet. Prinzipiell könnte eine Struktureinheit jedoch auch frei von einer Sollbruchstruktur sein oder weitere Sollbruchstrukturen aufweisen. Auch könnte eine Sollbruchstruktur in einem anderen Bereich einer Struktureinheit angeordnet sein. Zudem könnte eine Sollbruchstruktur eine andere Anzahl an Sollbruchstrukturelementen aufweisen, wie beispielsweise zumindest zwei, zumindest drei und/oder zumindest vier Sollbruchstrukturelemente, welche vorteilhaft beabstandet voneinander angeordnet sein könnten. Ferner ist denkbar, wenigstens ein Sollbruchstrukturelement kreuzförmig und/oder streifenförmig auszubilden.

Des Weiteren ist die Struktureinheit 16a im vorliegenden Fall mehrteilig ausgebildet. Die Struktureinheit 16a weist dabei zumindest zwei Strukturelemente 20a, 22a, insbesondere ein erstes Strukturelement 20a und ein zweites Strukturelement 22a, auf. Die Strukturelemente 20a, 22a sind korrespondierend zueinander ausgebildet. Die Strukturelemente 20a, 22a sind jeweils einstückig ausgebildet, insbesondere als Spritzgussteile. Die Strukturelemente 20a, 22a bestehen aus demselben Material, insbesondere dem mit den Verstärkungsfasern 14a verstärkten Kunststoff. Die Strukturelemente 20a, 22a begrenzen und/oder definieren jeweils einen Teil der äußeren Oberfläche der lasttragenden Baueinheit 10a. Die Strukturelemente 20a, 22a sind zudem beweglich miteinander verbunden, insbesondere derart, dass die Strukturelemente 20a, 22a relativ zueinander bewegt werden können. Alternativ könnte eine Struktureinheit jedoch auch einstückig ausgebildet sein und insbesondere aus einem Stück bestehen und/oder in einem Stück hergestellt sein. Dabei ist beispielsweise denkbar, die Struktureinheit als einstückiges Spritzgussteil auszubilden. Zudem könnten wenigstens zwei Strukturelemente auch zumindest teilweise aus unterschiedlichen Materialien bestehen und/oder unbeweglich miteinander verbunden sein.

Darüber hinaus weist die Baueinheit 10a eine Anbaueinheit 24a auf. Die Anbaueinheit 24a besteht im vorliegenden Fall aus einem Material, welches von einem Material der Struktureinheit 16a abweicht. Die Anbaueinheit 24a besteht beispielhaft aus einer Metalllegierung, insbesondere einer Aluminiumlegierung. Die Anbaueinheit 24a ist mit der Struktureinheit 16a verbindbar. In einem montierten Zustand weist die Anbaueinheit 24a eine Wirkverbindung mit der Struktureinheit 16a, insbesondere der äußeren Oberfläche der Struktureinheit 16a, auf. Im vorliegenden Fall ist die Anbaueinheit 24a dazu vorgesehen, die Struktureinheit 16a zu verstärken.

Dazu umfasst die Anbaueinheit 24a wenigstens ein Anbauelement 26a, 27a. Im vorliegenden Fall umfasst die Anbaueinheit 24a zwei Anbauelemente 26a, 27a. Die Anbauelemente 26a, 27a sind zumindest im Wesentlichen identisch zueinander. Die Anbauelemente 26a, 27a sind zylinderförmig, insbesondere hohlzylinderförmig und/oder rohrförmig, ausgebildet. Die Anbauelemente 26a, 27a sind hülsenförmig ausgebildet. Die Anbauelemente 26a, 27a sind jeweils einstückig ausgebildet. Jedes der Anbauelemente 26a, 27a ist einem der Koppelelemente 46a, 48a zugeordnet. Im montierten Zustand sind die Anbauelemente 26a, 27a jeweils form- und/oder kraftschlüssig mit einem der Koppelelemente 46a, 48a verbunden, insbesondere mittels einer Pressverbindung. Die Anbauelemente 26a, 27a sind dazu vorgesehen, die Koppelstruktur 32a der Struktureinheit 16a zu verstärken und/oder einen definierten Lastpfad und/oder Krafteinleitungspfad auszubilden. Zudem sind die Anbauelemente 26a, 27a dazu vorgesehen, die Haupttragestruktur 34a der Struktureinheit 16a zu verstärken. Alternativ könnte eine Anbaueinheit und/oder wenigstens ein Anbauelement jedoch auch zumindest teilweise aus einem selben Material wie eine Struktureinheit und/oder aus einem von einer Metalllegierung abweichenden Material bestehen. Zudem könnte eine Anbaueinheit und/oder wenigstens ein Anbauelement stoffschlüssig und/oder integral mit einer Struktureinheit verbunden sein. In diesem Zusammenhang ist insbesondere auch denkbar, eine Anbaueinheit und/oder wenigstens ein Anbauelement zumindest teilweise mit einer Struktureinheit zu umspritzen. Ferner könnten Anbauelemente ausschließlich dazu vorgesehen sein, eine Koppelstruktur oder eine Haupttragestruktur einer Struktureinheit zu verstärken. Darüber hinaus könnte eine Luftfahrzeugsitzvorrichtung prinzipiell auch frei von einer Anbaueinheit sein.

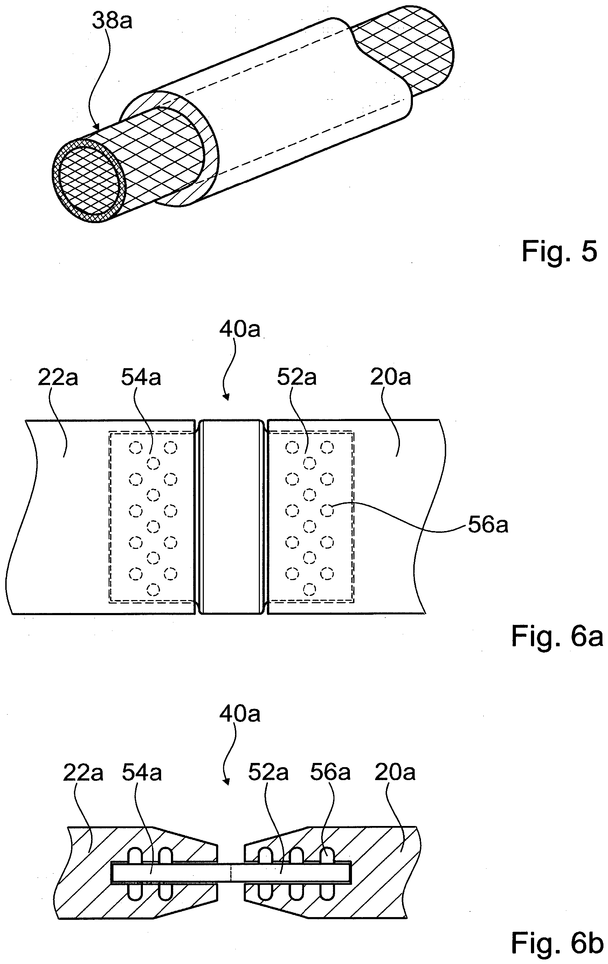

Die Baueinheit 10a umfasst ferner eine Funktionseinheit 36a (vgl. insbesondere Figuren 5, 6a und 6b). Die Funktionseinheit 36a ist zu wenigstens einem Großteil in die Struktureinheit 16a eingebettet. Die Funktionseinheit 36a ist somit zu wenigstens einem Großteil von der Struktureinheit 16a umschlossen.

Die Funktionseinheit 36a umfasst wenigstens ein Stützelement 38a (vgl. insbesondere Figur 5). Das Stützelement 38a ist vollständig in die Struktureinheit 16a eingebettet. Im vorliegenden Fall ist das Stützelement 38a beispielhaft in das zweite Strukturelement 22a eingebettet. Alternativ könnte ein Stützelement jedoch auch in einem beliebigen anderen

Bereich einer Struktureinheit angeordnet sein. Das Stützelement 38a ist zumindest im Wesentlichen zylinderförmig, insbesondere hohlzylinderförmig und/oder rohrförmig, ausgebildet. Das Stützelement 38a ist einstückig ausgebildet. Das Stützelement 38a besteht aus einer Metalllegierung, im vorliegenden Fall insbesondere einer Aluminiumlegierung. Das Stützelement 38a ist ferner mittels eines 3D-Druck-Verfahrens hergestellt. Das Stützelement 38a ist zudem perforiert und/oder maschenförmig ausgebildet, wodurch insbesondere ein Gewicht des Stützelements 38a reduziert werden kann. Das Stützelement 38a ist dabei zu einer Unterstützung und/oder einer inneren Verstärkung der Struktureinheit 16a vorgesehen. Alternativ könnte ein Stützelement jedoch auch aus einem von einer Aluminiumlegierung abweichenden Material, wie beispielsweise Kunststoff, bestehen und/oder eine andere Form aufweisen, welche vorteilhaft an eine äußere Form einer Baueinheit und/oder einer Struktureinheit angepasst ist. Insbesondere könnte ein Stützelement dabei beispielsweise als U-Profil, C-Profil, L-Profil und/oder I-Profil ausgebildet sein. Zudem könnte ein Stützelement mehrere Halteelemente aufweisen, wodurch eine Haltekraft zwischen dem Stützelement und einer Struktureinheit verbessert werden kann.

Die Funktionseinheit 36a umfasst ferner wenigstens ein Scharnierelement 40a (vgl. insbesondere Figuren 6a und 6b). Das Scharnierelement 40a ist zu wenigstens einem Großteil in die Struktureinheit 16a eingebettet. Das Scharnierelement 40a besteht aus einer Metalllegierung, im vorliegenden Fall insbesondere einer Federstahllegierung. Das Scharnierelement 40a umfasst zwei Beschläge 52a, 54a, wobei ein erster Beschlag 52a der Beschläge 52a, 54a mit dem ersten Strukturelement 20a der Strukturelemente 20a, 22a und ein zweiter Beschlag 54a der Beschläge 52a, 54a mit dem zweiten Strukturelement 22a der Strukturelemente 20a, 22a verbunden ist. Das Scharnierelement 40a verbindet dabei die Strukturelemente 20a, 22a beweglich miteinander.

Das Scharnierelement 40a umfasst ferner mehrere Halteelemente 56a zur Verstärkung einer Haltekraft zwischen dem Scharnierelement 40a und der Struktureinheit 16a. Die Halteelemente 56a sind als Haltepins ausgebildet. Im vorliegenden Fall sind jedem der Beschläge 52a, 54a mehrere der Halteelemente 56a zugeordnet. Alternativ könnte ein Scharnierelement jedoch auch aus einem von einer Federstahllegierung abweichenden Material bestehen und/oder als Filmscharnier ausgebildet sein. Zudem könnte ein Scharnierelement auch als Halteausnehmungen ausgebildete Halteelemente umfassen oder frei von Halteelementen sein. Darüber hinaus ist grundsätzlich denkbar, auf ein Scharnierelement vollständig zu verzichten.

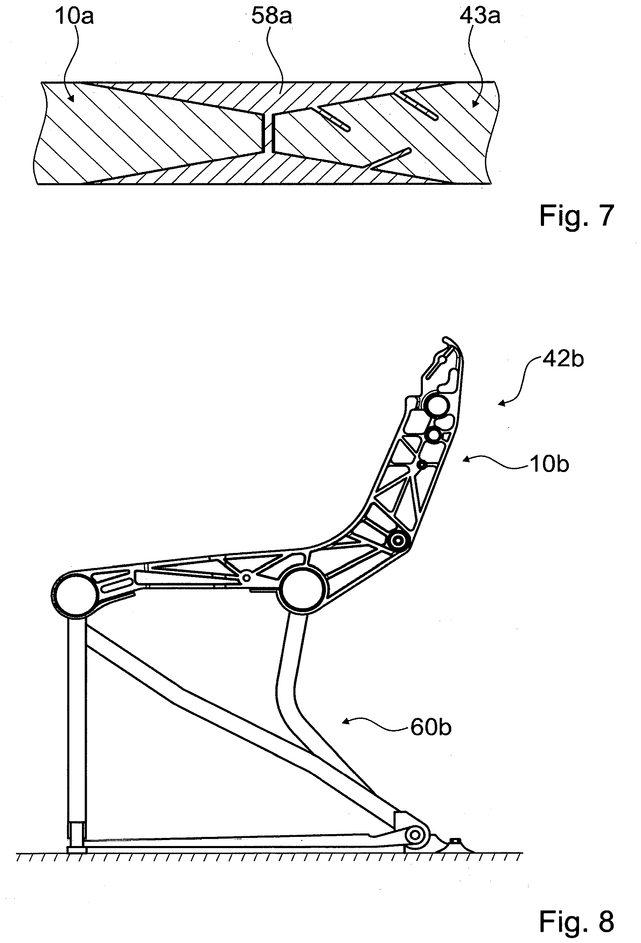

Figur 7 zeigt ferner ein beispielhaftes Verfahren zur Kopplung der lasttragenden Baueinheit 10a der Luftfahrzeugsitzvorrichtung mit wenigstens einem weiteren Objekt 43a.

Das weitere Objekt 43a kann dabei insbesondere eine zu der Baueinheit 10a zumindest im Wesentlichen baugleiche weitere lasttragende Baueinheit sein. Zur Kopplung wird die Baueinheit 10a und das wenigstens eine weitere Objekt 43a in unmittelbarer Nähe zueinander angeordnet und anschließend mittels eines von einer Umspritzung verschiedenen Spritz- und/oder Pressverfahrens mit dem wenigstens einen weiteren Objekt 43a gekoppelt, insbesondere derart, dass die Baueinheit 10a und das wenigstens eine weitere Objekt 43a eine zumindest im Wesentlichen homogene Struktur und/oder Baugruppe ausbilden. Die Baueinheit 10a und das wenigstens eine weitere Objekt 43a können dabei beispielsweise eine gemeinsame Basisstruktur des Luftfahrzeugsitzes 42a ausbilden.

Im vorliegenden Fall wird die lasttragende Baueinheit 10a mittels eines Spritzverfahrens mit dem wenigstens einen weiteren Objekt 43a gekoppelt. Dabei wird zur Kopplung der Baueinheit 10a und des wenigstens einen weiteren Objekts 43a ein Koppelmaterial 58a verwendet. Als Koppelmaterial 58a kann dabei ein Kunststoff, wie beispielsweise ein verstärkter und/oder unverstärkter Duroplast und/oder Thermoplast verwendet werden.

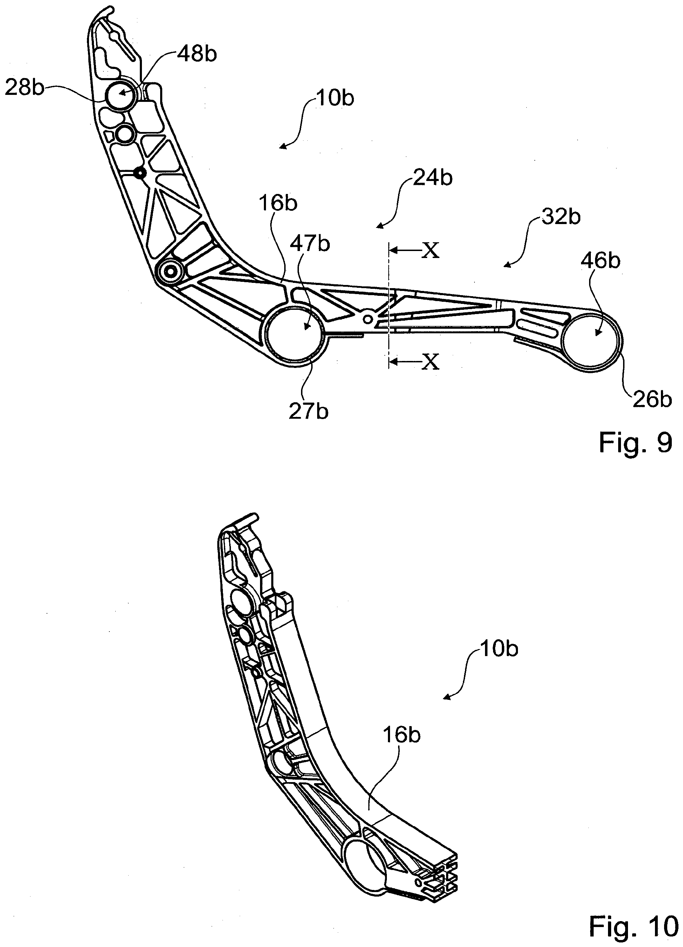

In den Figuren 8 bis 15 sind nicht erfindungsgemäße, jedoch für das Verständnis von bestimmten Ausführungsbeispielen hilfreiche Beispiele gezeigt. Die nachfolgenden Beschreibungen und die Zeichnungen beschränken sich im Wesentlichen auf die Unterschiede zwischen den Beispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der Ausführungsbeispiele, insbesondere der Figuren 1 bis 7, verwiesen werden kann. Zur Unterscheidung der Ausführungsbeispiele ist der Buchstabe a den Bezugszeichen des Ausführungsbeispiels in den Figuren 1 bis 7 nachgestellt. In den Beispielen der Figuren 8 bis 15 ist der Buchstabe a durch die Buchstaben b bis d ersetzt.

In den Figuren 8 bis 10 ist ein nicht erfindungsgemäßes, jedoch für das Verständnis von bestimmten Ausführungsbeispielen hilfreiches Beispiel gezeigt. Dem

Beispiel der Figuren 8 bis 10 ist der Buchstabe b nachgestellt. Das Beispiel der Figuren 8 bis 10 unterscheidet sich von dem vorherigen Ausführungsbeispiel zumindest im Wesentlichen durch eine Art einer lasttragenden Baueinheit 10b.

Die Baueinheit 10b ist im vorliegenden Fall beispielhaft als Sitzteiler ausgebildet. Die Baueinheit 10b ist dazu vorgesehen, eine Spannung von zumindest 100 MPa aufzunehmen, insbesondere ohne dabei verformt und/oder zerstört zu werden, und insbesondere in einem montierten Zustand mittelbar, insbesondere über eine Grundstruktur 60b eines Luftfahrzeugsitzes 42b, in einen Boden eines Luftfahrzeugs einzuleiten.

Die Baueinheit 10b weist eine eine Form der Baueinheit 10b definierende Struktureinheit 16b auf, welche vollständig aus einem mit Verstärkungsfasern verstärkten Kunststoff besteht, wobei die Verstärkungsfasern zumindest im Wesentlichen homogen über die gesamte Struktureinheit 16b verteilt sind. Die Struktureinheit 16b ist als Vollkörper ausgebildet. Die Struktureinheit 16b ist einstückig ausgebildet. Im vorliegenden Fall ist die Struktureinheit 16b als Spritzgussteil ausgebildet. Die Struktureinheit 16b besteht im vorliegenden Fall aus PEEK 90HMF40.

Die Struktureinheit 16b weist zudem eine Koppelstruktur 32b auf, welche im vorliegenden Fall zumindest drei, insbesondere als Koppelausnehmungen ausgebildete, Koppelelemente 46b, 47b, 48b aufweist.

Darüber hinaus weist die Baueinheit 10b eine Anbaueinheit 24b auf, wobei jedem der Koppelelemente 46b, 47b, 48b ein Anbauelement 26b, 27b, 28b zugeordnet ist. Die Anbauelemente 26b, 27b, 28b sind zumindest im Wesentlichen identisch zu den Anbauelementen 26a, 27b des vorherigen Ausführungsbeispiels und dazu vorgesehen, die Koppelstruktur 32b der Struktureinheit 16b zu verstärken.

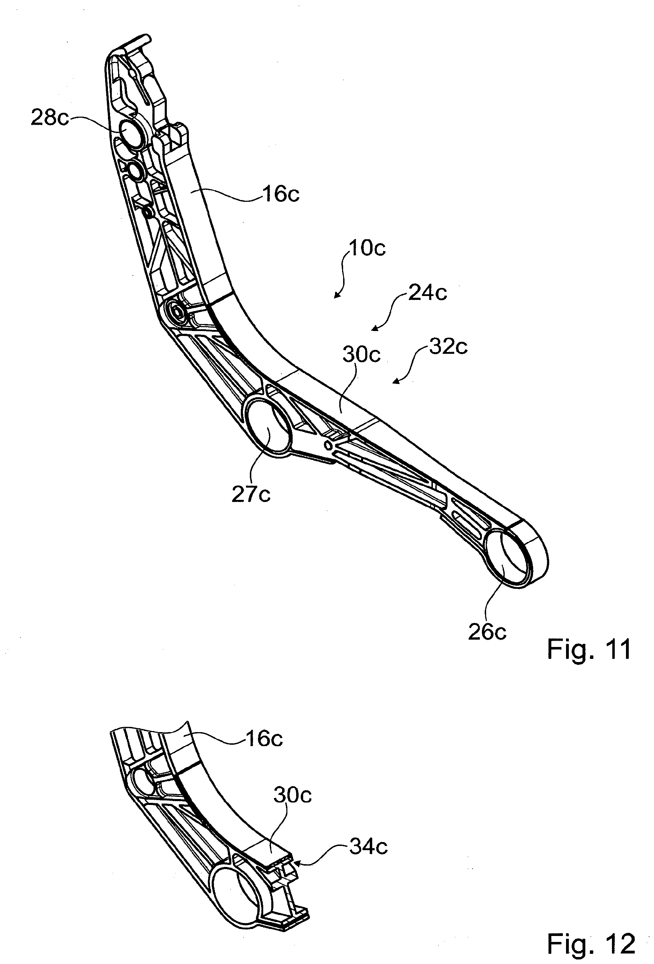

In den Figuren 11 bis 13 ist ein weiteres nicht erfindungsgemäßes, jedoch für das Verständnis von bestimmten Ausführungsbeispielen hilfreiches Beispiel gezeigt. Dem Beispiel der Figuren 11 bis 13 ist der Buchstabe c nachgestellt. Das weitere Beispiel der Figuren 11 bis 13 unterscheidet sich von den Ausführungsbeispielen und dem vorherigen nicht erfindungsgemäßen Beispiel zumindest im Wesentlichen durch eine Ausgestaltung einer Anbaueinheit 24c.

Eine lasttragende Baueinheit 10c ist im vorliegenden Fall wiederum beispielhaft als Sitzteiler ausgebildet und umfasst eine Struktureinheit 16c sowie die Anbaueinheit 24c.

In diesem Fall umfasst die Anbaueinheit 24c drei Anbauelemente 26c, 27c, 28c, welche dazu vorgesehen sind, eine Koppelstruktur 32c der Struktureinheit 16c zu verstärken. Zudem umfasst die Anbaueinheit 24c ein weiteres Anbauelement 30c, welches dazu vorgesehen ist, eine Haupttragestruktur 34c der Struktureinheit 16c zu verstärken. Das weitere Anbauelement 30c ist zu einer Verstärkung der Haupttragestruktur 34c in einem Bereich der Struktureinheit 16c angeordnet, in welchem eine größte Belastung auf die Struktureinheit 16c wirkt und/oder eine größte Last auf die Struktureinheit 16c einwirkt. Das weitere Anbauelement 30c ist streifenförmig ausgebildet. Das weitere Anbauelement 30c besteht aus einem Metall, im vorliegenden Fall insbesondere einem hochfesten Stahl. In einem montierten Zustand ist das weitere Anbauelement 30c formschlüssig mit der Struktureinheit 16c, insbesondere der Haupttragestruktur 34c der Struktureinheit 16c, verbunden.

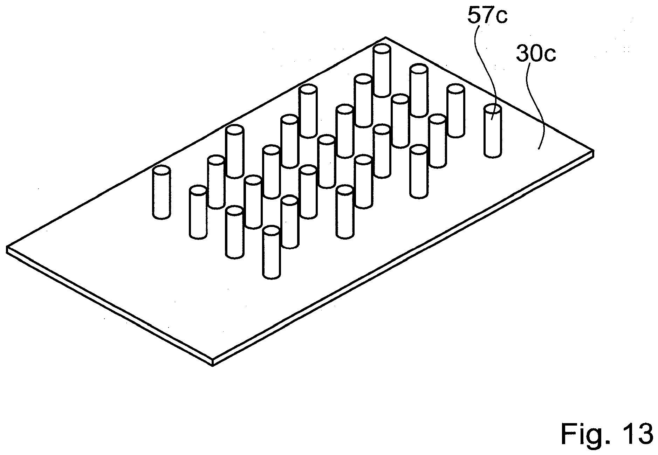

Zudem weist das weitere Anbauelement 30c mehrere, im vorliegenden Fall insbesondere als Haltepins ausgebildete, weitere Halteelemente 57c auf, welche zu einer Kopplung und/oder einer Befestigung des weiteren Anbauelements 30c an der Struktureinheit 16c vorgesehen sind (vgl. Figur 13). Alternativ könnte ein weiteres Anbauelement jedoch auch frei von weiteren Halteelementen ausgebildet sein und beispielsweise stoffschlüssig mit einer Struktureinheit verbunden werden.

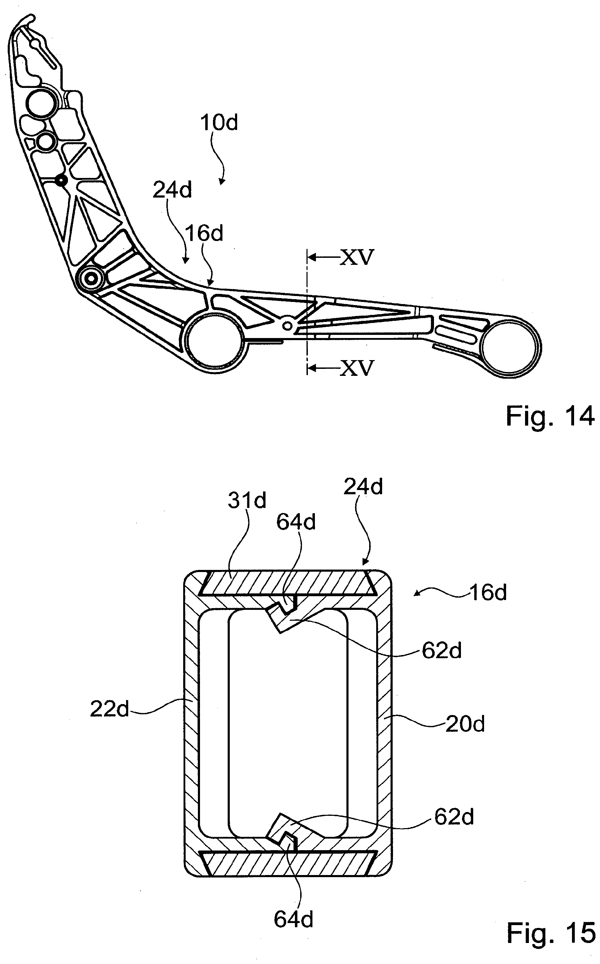

In den Figuren 14 und 15 ist ein weiteres nicht erfindungsgemäßes, jedoch für das Verständnis von bestimmten Ausführungsbeispielen hilfreiches Beispiel gezeigt. Dem Beispiel der Figuren 14 und 15 ist der Buchstabe d nachgestellt. Das weitere Beispiel der Figuren 14 und 15 unterscheidet sich von den Ausführungsbeispielen und den vorherigen nicht erfindungsgemäßen Beispielen zumindest im Wesentlichen durch eine Ausgestaltung einer lasttragenden Baueinheit 10d.

Die Baueinheit 10d ist im vorliegenden Fall beispielhaft als Sitzteiler ausgebildet. Die Baueinheit 10d weist eine eine Form der Baueinheit 10d definierende Struktureinheit 16d auf.

Die Struktureinheit 16d weist zumindest zwei Strukturelemente 20d, 22d auf. Die Strukturelemente 20d, 22d sind korrespondierend zueinander ausgebildet. Im vorliegenden Fall sind die Strukturelemente 20d, 22d zumindest im Wesentlichen spiegelsymmetrisch zueinander ausgebildet. Die Strukturelemente 20d, 22d sind jeweils einstückig ausgebildet. Die Strukturelemente 20d, 22d sind als Spritzgussteile ausgebildet.

Die Strukturelemente 20d, 22d weisen zueinander korrespondierende Verbindungselemente 62d, 64d auf. Die Verbindungselemente 62d, 64d sind als zueinander korrespondierende Clipse ausgebildet. In einem montierten Zustand sind die Strukturelemente 20d, 22d mittels der Verbindungselemente 62d, 64d unbeweglich sowie lasttragend miteinander verbunden, insbesondere derart, dass die Strukturelemente 20d, 22d ein Hohlprofil ausbilden.

Darüber hinaus weist die Baueinheit 10d eine Anbaueinheit 24d auf. Die Anbaueinheit 24d umfasst wenigstens ein zusätzliches Anbauelement 31d, welches dazu vorgesehen ist, die Strukturelemente 20d, 22d miteinander zu verbinden. Das zusätzliche Anbauelement 31d ist im vorliegenden Fall streifenförmig ausgebildet. Das zusätzliche Anbauelement 31d besteht aus einem faserverstärkten Kunststoff, im vorliegenden Fall insbesondere einem kohlenstofffaserverstärkten Kunststoff. Das zusätzliche Anbauelement 31d ist als Klebeelement ausgebildet. In einem montierten Zustand ist das zusätzliche Anbauelement 32d zur Verbindung der Strukturelemente 20d, 22d stoffschlüssig mit den Strukturelementen 20d, 22d verbunden. Alternativ könnte ein Anbauelement zur Verbindung zweier Strukturelemente jedoch auch als Klammer ausgebildet sein und/oder kraft- und/oder formschlüssig mit den Strukturelementen verbunden sein. Auch könnte ein zusätzliches Anbauelement aus einem von einem faserverstärkten Kunststoff abweichenden Material bestehen, wie beispielsweise einem, insbesondere mit einem Klebefilm versehenen, Metall.

## Patentansprüche

1. Luftfahrzeugsitzvorrichtung mit zumindest einer lasttragenden Baueinheit (10a-d), welche in zumindest einem Außenteilbereich (12a) der Baueinheit (10a-d) aus einem mit Verstärkungsfasern (14a) verstärkten Kunststoff besteht, **dadurch gekennzeichnet, dass** die Verstärkungsfasern (14a) im Rahmen fertigungstechnischer Möglichkeiten und/oder im Rahmen standardisierter Toleranzen homogen über den gesamten Außenteilbereich (12a) verteilt sind, wobei die Baueinheit (10a-d) wenigstens eine, eine Form der Baueinheit (10a-d) zumindest im Wesentlichen definierende, Struktureinheit (16a-d) aufweist, welche den Außenteilbereich (12a) aufweist, wobei die Baueinheit (10a) wenigstens eine zumindest teilweise in die Struktureinheit (16a) eingebettete Funktionseinheit (36a) aufweist, und wobei die Funktionseinheit (36a) wenigstens ein Stützelement (38a) aufweist, welches zu einer Unterstützung der Struktureinheit (16a) vorgesehen ist.

2. Luftfahrzeugsitzvorrichtung Anspruch 1, **dadurch gekennzeichnet, dass** der Außenteilbereich (12a) wesentliche lasttragende Eigenschaften aufweist.

3. Luftfahrzeugsitzvorrichtung nach Anspruch 1 oder 2, **dadurch gekennzeichnet, dass** die Struktureinheit (16a-d) zu wenigstens einem Großteil aus dem mit Verstärkungsfasern (14a) verstärkten Kunststoff besteht.

4. Luftfahrzeugsitzvorrichtung nach einem der vorhergehenden Ansprüche, **dadurch gekennzeichnet, dass** die Struktureinheit (16a; 16d) ein zu wenigstens einem Großteil geschlossenes Hohlprofil ausbildet.

5. Luftfahrzeugsitzvorrichtung nach einem der vorhergehenden Ansprüche, **dadurch gekennzeichnet, dass** die Struktureinheit (16a) zumindest eine Sollbruchstruktur (18a) aufweist.

6. Luftfahrzeugsitzvorrichtung nach einem der vorhergehenden Ansprüche, **dadurch gekennzeichnet, dass** die Struktureinheit (16b; 16c) einstückig ausgebildet ist.

7. Luftfahrzeugsitzvorrichtung nach einem der Ansprüche 1 bis 5, **dadurch gekennzeichnet, dass** die Struktureinheit (16a; 16d) wenigstens zwei Strukturelemente (20a, 22a; 20d, 22d) aufweist, welche zumindest im Wesentlichen korrespondierend zueinander ausgebildet sind.

8. Luftfahrzeugsitzvorrichtung nach einem der vorhergehenden Ansprüche, **dadurch gekennzeichnet, dass** die Baueinheit (10a-d) wenigstens eine mit der Struktureinheit (16a-d) verbindbare und/oder verbundene Anbaueinheit (24a-d) aufweist.

9. Luftfahrzeugsitzvorrichtung nach Anspruch 8, **dadurch gekennzeichnet, dass** die Anbaueinheit (24a-d) wenigstens ein Anbauelement (26a, 27a; 26b, 27b, 28b; 26c, 27c, 28c) aufweist, welches dazu vorgesehen ist, eine Koppelstruktur (32a-c) der Struktureinheit (16a-d) zu verstärken.

10. Luftfahrzeugsitzvorrichtung nach Anspruch 8 oder 9, **dadurch gekennzeichnet, dass** die Anbaueinheit (24a; 24c) wenigstens ein Anbauelement (26a, 27a; 30c) aufweist, welches dazu vorgesehen ist, eine Haupttragestruktur (34a; 34c) der Struktureinheit (16a; 16c) zu verstärken.

11. Luftfahrzeugsitzvorrichtung nach einem der Ansprüche 8 bis 10, **dadurch gekennzeichnet, dass** die Anbaueinheit (24d) wenigstens ein Anbauelement (31d) aufweist, welches dazu vorgesehen ist, wenigstens zwei Strukturelemente (20d, 22d) der Struktureinheit (16d) miteinander zu verbinden.

12. Luftfahrzeugsitzvorrichtung nach einem der vorhergehenden Ansprüche, **dadurch gekennzeichnet, dass** die Funktionseinheit (36a) wenigstens ein Scharnierelement (40a) aufweist, welches dazu vorgesehen ist, wenigstens zwei Strukturelemente (20a, 22a) der Struktureinheit (16a) beweglich miteinander zu verbinden.

13. Luftfahrzeugsitz (42a; 42b) mit zumindest einer Luftfahrzeugsitzvorrichtung nach einem der vorhergehenden Ansprüche.

## Claims

1. Aircraft seat device with at least one load-bearing constructional unit (10a-d) which is, in at least one outer subregion (12a) of the constructional unit (10a-d), implemented of a synthetic material that is reinforced with reinforcing fibres (14a) **characterised in that** within the bounds of manufacturing possibilities and/or within the bounds of standardised tolerances, the reinforcing fibres (14a) are distributed homogeneously over the entire outer subregion (12a),
the constructional unit (10a-d) comprising at least one structural unit (16a-d) which at least substantially defines a shape of the constructional unit (10a-d) and comprises the outer subregion (12a),
the constructional unit (10a) comprising at least one functional unit (36a), which is at least partially embedded in the structural unit (16a), and
the functional unit (36a) comprising at least one support element (38a) that is configured for a support of the structural unit (16a).

2. Aircraft seat device according to claim 1,
**characterised in that** the outer subregion (12a) has essential load-bearing properties.

3. Aircraft seat device according to claim 1 or 2,
**characterised in that** the structural unit (16a-d) is implemented at least to a large extent of the synthetic material that is reinforced with reinforcing fibres (14a).

4. Aircraft seat device according to one of the preceding claims,
**characterised in that** the structural unit (16a; 16d) forms an at least largely closed hollow profile.

5. Aircraft seat device according to one of the preceding claims,
**characterised in that** the structural unit (16a) has at least one predetermined breaking structure (18a).

6. Aircraft seat device according to one of the preceding claims,
**characterised in that** the structural unit (16b; 16c) is embodied in one piece.

7. Aircraft seat device according to one of claims 1 to 5,
**characterised in that** the structural unit (16a; 16d) comprises at least two structural elements (20a, 22a; 20d, 22d), which are implemented at least substantially correspondingly to each other.

8. Aircraft seat device according to one of the preceding claims,
**characterised in that** the constructional unit (10a-d) comprises at least one add-on unit (24a-d) that is connectable and/or connected to the structural unit (16a-d).

9. Aircraft seat device according to claim 8,
**characterised in that** the add-on unit (24a-d) comprises at least one add-on element (26a, 27a; 26b, 27b, 28b; 26c, 27c, 28c) which is configured for a reinforcement of a coupling structure (32a-c) of the structural unit (16a-d).

10. Aircraft seat device according to claim 8 or 9,
**characterised in that** the add-on unit (24a; 24c) comprises at least one add-on element (26a, 27a; 30c) which is configured for a reinforcement of a main load-bearing structure (34a; 34c) of the structural unit (16a; 16c).

11. Aircraft seat device according to one of claims 8 to 10,
**characterised in that** the add-on unit (24d) comprises at least one add-on element (31d) which is configured to connect at least two structural elements (20d, 22d) of the structural unit (16d) to each other.

12. Aircraft seat device according to one of the preceding claims,
**characterised in that** the functional unit (36a) comprises at least one hinge element (40a), which is configured to connect at least two structural elements (20a, 22a) of the structural unit (16a) movably to each other.

13. Aircraft seat (42a; 42b) with at least one aircraft seat device according to one of the preceding claims.

## Revendications

1. Dispositif de siège d'aéronef
avec au moins une unité de construction porteuse (10a-d) implémentée, dans au moins une sous-partie extérieure (12a) de l'unité de construction porteuse (10ad), d'un matériau synthétique renforcé par des fibres de renforcement (14a), **caractérisé en ce que** dans le cadre de possibilités de fabrication et/ou dans le cadre de tolérances standardisées, les fibres de renforcement (14a) sont distribuées d'une façon homogène sur la sous-partie extérieure entière (12a), l'unité de construction (10a-d) comprenant au moins une unité structurelle (16ad) au moins sensiblement définissant une forme de l'unité de construction (10ad) et comprenant la sous-partie extérieure (12a),
l'unité de construction (10a) comprenant au moins une unité fonctionnelle (36a) incorporée au moins partiellement dans l'unité structurelle (16a) et l'unité fonctionnelle (36a) comprenant au moins un élément de support (38a) qui est prévu pour un support de l'unité structurelle (16a).

2. Dispositif de siège d'aéronef selon la revendication 1,
**caractérisé en ce que** la sous-partie extérieure (12a) comporte des caractéristiques porteuses essentielles.

3. Dispositif de siège d'aéronef selon la revendication 1 ou 2,
**caractérisé en ce que** l'unité structurelle (16a-d) est implémentée au moins largement du matériau synthétique renforcé par des fibres de renforcement (14a).

4. Dispositif de siège d'aéronef selon l'une des revendications précédentes, **caractérisé en ce que** l'unité structurelle (16a ; 16d) forme un profil creux qui est au moins largement fermé.

5. Dispositif de siège d'aéronef selon l'une des revendications précédentes, **caractérisé en ce que** l'unité structurelle (16a) comporte au moins une structure destinée à la rupture (18a).

6. Dispositif de siège d'aéronef selon l'une des revendications précédentes, **caractérisé en ce que** l'unité structurelle (16b ; 16c) est réalisé d'une pièce.

7. Dispositif de siège d'aéronef selon l'une des revendications 1 à 5,
**caractérisé en ce que** l'unité structurelle (16a ; 16d) comprend au moins deux éléments structurels (20a, 22a ; 20d, 22d), qui sont réalisés d'une telle manière qu'ils correspondent l'un à l'autre au moins sensiblement.

8. Dispositif de siège d'aéronef selon l'une des revendications précédentes, **caractérisé en ce que** l'unité de construction (10a-d) comprend au moins une unité d'annexe (24a-d) raccordable et/ou raccordée à l'unité structurelle (16a-d).

9. Dispositif de siège d'aéronef selon la revendication 8,
**caractérisé en ce que** l'unité d'annexe (24a-d) comprend au moins un élément d'annexe (26a, 27a ; 26b, 27b, 28b ; 26c, 27c, 28c) qui est prévu pour un renforcement d'une structure de couplage (32a-c) de l'unité structurelle (16a-d).

10. Dispositif de siège d'aéronef selon la revendication 8 ou 9,
**caractérisé en ce que** l'unité d'annexe (24a ; 24c) comporte au moins un élément d'annexe (26a, 27a ; 30c) prévu pour un renforcement d'une structure porteuse principale (34a ; 34c) de l'unité structurelle (16a ; 16c).

11. Dispositif de siège d'aéronef selon l'une des revendications 8 à 10,
**caractérisé en ce que** l'unité d'annexe (24d) comporte au moins un élément d'annexe (31d) prévu à raccorder au moins deux éléments structurels (20d, 22d) de l'unité structurelle (16d) l'un à l'autre.

12. Dispositif de siège d'aéronef selon l'une des revendications précédentes, **caractérisé en ce que** l'unité fonctionnelle (36a) comporte au moins un élément de charnière (40a) prévu pour un raccordement mobile d'au moins deux éléments structurels (20a, 22a) de l'unité structurelle (16a).

13. Siège d'aéronef (42a ; 42b) avec au moins un dispositif de siège d'aéronef selon l'une des revendications précédentes.
